# NEUE EUROPÄISCHE PATENTSCHRIFT

(11) **EP 2 700 613 B2**
(45) Veröffentlichungstag und Bekanntmachung des Hinweises auf die Entscheidung über den Einspruch: **29.05.2019**
(45) Hinweis auf die Patenterteilung: 24.02.2016
(21) Anmeldenummer: 13181546.6
(22) Anmeldetag: 23.08.2013
(51) Int. Cl.: B67C 3/22

(54) **Getränkeabfüllanlage umfassend eine Verstellvo0rrichtung sowie Verfahren zur Reiniung einer Getränkeabfüllanlage**
Beverage filling system comprising an adjusting device and method for cleaninga beverage filling system
Installation d'embouteillage comprenant un dispositif de réglage et procédé de nettoyage d'une installation embouteillage

(30) Priorität: 23.08.2012 DE 102012107763
(43) Veröffentlichungstag der Anmeldung: 26.02.2014
(73) Patentinhaber: Krones AG, 93073 Neutraubling (DE)
(72) Erfinder: Buchhauser, Klaus, 93073 Neutraubling (DE); Braun, Franz, 93073 Neutraubling (DE)
(74) Vertreter: Nordmeyer, Philipp Werner

(56) Entgegenhaltungen:
- EP-A1- 1 170 210
- EP-A1- 1 937 931
- EP-A1- 2 368 835
- WO-A1-2006/042816
- WO-A2-03/052280
- AU-A- 2 214 077
- CH-A- 311 905
- CN-U- 202 199 555
- DD-A1- 130 874
- DE-A1- 1 548 295
- DE-A1- 2 340 796
- DE-A1- 10 342 237
- DE-A1- 19 603 266

## Beschreibung

### Technisches Gebiet

Die vorliegende Erfindung betrifft eine Getränkeabfüllanlage umfassend eine Verstellvorrichtung zum Verstellen der Position von Maschinenelementen relativ zueinander, sowie ein Verfahren zur Reinigung einer solchen Verstellvorrichtung.

### Stand der Technik

Zum Verstellen von einzelnen Maschinenelementen relativ zueinander, insbesondere im Bereich von Getränkeabfüllanlagen, ist es bekannt, die Maschinenelemente gegeneinander über Verstelleinrichtungen zu verstellen. Als solche Verstelleinrichtungen dienen beispielsweise hydraulische oder pneumatische Zylinder, Motorzylinder oder Gewindetriebe, wie beispielsweise Spindeltriebe.

Eine besonders einfache Verstellvorrichtung zum Aufbringen linearer Bewegungen auf Maschinenelemente wird durch eine Gewindespindel und eine dazu passende Gewindemutter realisiert. Hierbei wird, während sich die Gewindespindel dreht und sich die Gewindemutter nicht mitdreht, eine lineare Translation der Gewindemutter entlang der Gewindespindel erreicht. Diese Linearverschiebung der Gewindemutter entlang der Gewindespindel wird zur Übertragung der linearen Verstellbewegung verwendet.

Bei Getränkeabfüllanlagen ist es erforderlich, dass die im Abfüllbereich und besonders die innerhalb eines Isolators einer Aseptikanlage aufgenommenen Verstellvorrichtungen den Vorgaben einer hygienischen und insbesondere einer aseptischen Abfüllung genügen. Hierzu werden bislang Linearantriebe aufwändig über Faltenbälge abgedichtet, derart, dass eine Reinigung und Sterilisierung in zufriedenstellender Weise durchgeführt werden kann.

Bei einem Faltenbalg handelt es sich um ein äußerst sensibles Bauteil, dessen Dichtheit immer wieder überwacht werden muss. Weiterhin weisen Faltenbälge ein großes Bauvolumen auf und die Anbindung eines Faltenbalgs an die jeweiligen Maschinenelemente ist nur aufwändig in einer hygienisch einwandfreien Weise erreichbar. Bei einem Faltenbalg handelt es sich weiterhin um ein weiteres Bauteil, welches entsprechend einen Kostenpunkt darstellt.

Als Material wird bei Faltenbälgen typischerweise Kunststoff verwendet, welcher aber schlecht trockenbar ist, was bei einer gasförmigen Isolatorsterilisation kritisch sein kann. Bei der Verwendung von Faltenbälgen aus Metall hingegen ist ein großer Einbauraum vonnöten. Beispielsweise aus der DE 33 29 831 A1 ist eine Universalverschließmaschine für die Aufbringung von Verschlusskappen auf Behälter bekannt, bei welcher die Höhenverstellung eines oberen Teils der Universalverschließmaschine gegenüber einem unteren Teil über einen Spindelantrieb erreicht wird, welcher über einen Faltenbalg abgedichtet ist.

Die EP 2 368 835 beschreibt eine Getränkeabfüllanlage mit einer Verstellvorrichtung gemäß dem Oberbegriff des Anspruchs 1.

Die DE 1 548 295 A beschreibt einen Dorn mit einem Gewinde, welches eine Reinigungsausnehmung aufweist. Die CH 311 905 A beschreibt eine Schraubenmutter, welche eine Reinigungsausnehmung aufweist.

### Darstellung der Erfindung

Ausgehend von dem bekannten Stand der Technik ist es daher eine Aufgabe der vorliegenden Erfindung, eine Getränkeabfüllanlage anzugeben, welche bei einem vereinfachten Aufbau eine einwandfreie Reinigung erlaubt.

Diese Aufgabe wird durch die Getränkeabfüllanlage mit den Merkmalen des Anspruchs 1 gelöst. Vorteilhafte Weiterbildungen ergeben sich aus den Unteransprüchen.

Entsprechend umfasst die Verstellvorrichtung für die Getränkeabfüllanlage ein Rotationselement und ein durch Rotation des Rotationselements relativ zu diesem translatorisch bewegbares Translationselement. Erfindungsgemäß weist das Rotationselement und/oder das Translationselement, bevorzugt das Rotationselement oder das Rotationselement und das Translationselement, mindestens eine Reinigungsausnehmung zur Reinigung eines Kontaktbereiches zwischen dem Translationselement und dem Rotationselement auf.

Durch das Bereitstellen der Reinigungsausnehmung in dem Rotationselement und/oder dem Translationselement wird es möglich, auch den Kontaktbereich der Verstellvorrichtung, welcher zwischen dem Translationselement und dem Rotationselement liegt, zu spülen, zu reinigen, zu trocknen und/oder zu sterilisieren.

In herkömmlichen Verstellvorrichtungen ist es zwar einfach möglich, das Rotationselement durchgehend zu reinigen, zu trocknen und/oder zu sterilisieren, da durch eine Rotation des Rotationselements das Translationselement auf dem Rotationselement entlang bewegt werden kann, und entsprechend jegliche Oberfläche des Rotationselements zur Beaufschlagung mit einem entsprechenden Reinigungs-, Trocknungs- und/oder Sterilisationsmedium zugänglich gemacht werden kann, in den herkömmlichen Verstellvorrichtungen ist es aber nicht möglich, die Kontaktfläche zwischen dem Translationselement und dem Rotationselement zuverlässig zu behandeln, da ein direkter Zugang zu dem Kontaktbereich nicht möglich ist, ohne das Rotationselement von dem Translationselement zu trennen.

Durch die Bereitstellung der Reinigungsausnehmung in dem Translationselement und/oder dem Rotationselement wird nun eine einwandfreie Behandelbarkeit und freie Durchspülbarkeit des Kontaktbereichs erreicht.

Beispielsweise kann eine sich in Richtung der Rotationsachse erstreckende, nach außen offene Nut in dem Rotationselement eingebracht sein, mittels welcher erreicht wird, dass der Kontaktbereich zwischen dem Rotationselement und dem Translationselement bei einer Rotation des Rotationselements von der Nut vollständig und kontinuierlich überstrichen wird. Mittels der Nut kann ein Behandlungsmedium, beispielsweise ein Sterilisationsmedium, in den Kontaktbereich des Translationselements dringen, derart, dass das Translationselement auch im Kontaktbereich mit dem Rotationselement vollständig behandelt, bevorzugt gespült, gereinigt, getrocknet und sterilisiert werden kann.

Auch in einer umgekehrten Anordnung, nämlich einer Anordnung der Reinigungsausnehmung am Translationselement, kann diese vollständige Behandlung der Oberflächen bei einer entsprechenden Ausbildung der Reinigungsausnehmung erreicht werden. Dies kann beispielsweise durch ein Mitnehmen der Behandlungsflüssigkeit durch die Kontaktfläche zwischen dem Translationselement und dem Rotationselement erreicht werden.

In einer bevorzugten Variante ist das Rotationselement als Gewindespindel und das Translationselement als dazu komplementäre Gewindemutter ausgebildet. Eine solche Ausbildung eines Verstellmechanismus ist im Bereich der Getränkeabfüllanlagen einfach einsetzbar, da die bisherigen Spindelantriebe einfach durch den erfindungsgemäßen Spindelantrieb ersetzt werden können, wobei dann auf die Abdichtung mittels eines Faltenbalges verzichtet werden kann. Insbesondere wird die mindestens eine Reinigungsausnehmung bei der Ausbildung eines Spindelantriebes bevorzugt als radial nach außen offene Nut in der Gewindespindel vorgesehen. Diese offene Nut überstreicht dann bei der Rotation des Rotationselements den gesamten Innenbereich der Gewindemutter derart, dass nicht nur die Gewindespindel selbst durch ein Verschieben der Gewindemutter entlang der Rotationsachse eine vollständige Behandlung erfahren kann, sondern auch das Innere der Gewindemutter vollständig sterilisiert werden kann.

Wenn die offene Nut beispielsweise als sich geradlinig entlang der Rotationsachse erstreckende Nut ausgebildet ist, überstreicht die Nut die Innenfläche beziehungsweise das Innengewinde der Gewindemutter vollständig, ähnlich dem Lichtstrahl eines Leuchtturms.

In weiteren bevorzugten Varianten sind jedoch auch andere Ausprägungen der Reinigungsausnehmung denkbar, beispielsweise in Form einer Wendel, welche bevorzugt eine andere Steigung aufweist, als die Steigung des eigentlichen Gewindes, wobei bei einer solchen Ausprägung der Reinigungsausnehmung entsprechend eine vorteilhafte Wirkung bezüglich des Förderns des Sterilisationsmediums durch die Gewindemutter hindurch erreicht werden kann. Die Steigung einer solchen Wendel kann sowohl gleichsinnig mit dem Gewinde des Rotationselementes sein, oder auch gegensinnig (Links-, Rechtsgewinde).

Weiterhin ist es auch denkbar, senkrecht zur Rotationsachse des Rotationselements angeordnete Reinigungsausnehmungen vorzusehen, welche dann die Reinigungsflüssigkeit beziehungsweise das Sterilisationsmedium durch die Gewindemutter hindurch transportieren, wobei hier besonders bevorzugt Reinigungsmedien verwendet werden, welche eine entsprechende Adhäsion in den jeweiligen Reinigungsausnehmungen zeigen, um einen entsprechenden Transport durch die Gewindemutter hindurch zu ermöglichen.

Bei Verwendung einer Gewindemutter als Translationselement ist es ebenso denkbar, dass das Innengewinde neben den eigentlichen Gewindegängen zusätzlich noch eine Reinigungsausnehmung aufweist, welche beispielsweise wendelförmig eingeprägt ist, und welche es ermöglicht, die Reinigungsflüssigkeit beziehungsweise das Sterilisationsmedium während der Rotation zwischen Rotationselement und Translationselement zu bringen. Auch auf diese Weise kann erreicht werden, dass über eine Mitnahme der entsprechenden Reinigungs- beziehungsweise Sterilisationsmedien durch die Rotation des Rotationselements sämtliche Kontaktflächen beziehungsweise Kontaktbereiche zwischen den sich gegeneinander bewegenden Elementen mit den Medien beaufschlagt und damit gereinigt beziehungsweise sterilisiert werden.

Besonders bevorzugt sind Innen- und Außenkanten von Gewindegängen gerundet oder wenigstens abgeschrägt ausgeführt. Dadurch wird die Reinigbarkeit erhöht, aufgebrachte Medien können nicht so leicht anhaften und den Anforderungen nationaler bzw. internationaler Hygienestandards, wie beispielsweise EHEDG- oder 3A Designanforderungen kann Genüge getan werden.

In einer bevorzugten Weiterbildung ist das Rotationselement beziehungsweise das Translationselement mit einem nicht konstanten Durchmesser versehen und beispielsweise ellipsenförmig oder mit mindestens einer Abflachung versehen, so dass ein Durchströmen des Kontaktbereichs zwischen Translationselement und Rotationselement mit Reinigungsflüssigkeit beziehungsweise Sterilisationsmedium möglich wird.

Die oben genannte Aufgabe wird weiterhin durch ein Reinigungsverfahren für eine Getränkeabfüllanlage mit den Merkmalen des Anspruchs 10 gelöst. Vorteilhafte Weiterbildungen ergeben sich aus den Unteransprüchen.

Entsprechend umfasst das Verfahren zur Reinigung einer vorbeschriebenen Verstellvorrichtung das Beaufschlagen der Verstellvorrichtung mit einer Reinigungsflüssigkeit, einem Trocknungsmedium und/oder einem Sterilisationsmedium. Erfindungsgemäß wird das Rotationselement während der Beaufschlagung der Verstellvorrichtung mit Reinigungsflüssigkeit, Trocknungsmedium und/oder Sterilisationsmedium rotiert.

Dadurch, dass während der Rotation des Rotationselements relativ zum Translationselement über die Reinigungsausnehmung Reinigungsflüssigkeit beziehungsweise Sterilisationsmedium in den entsprechenden Kontaktbereich eingebracht wird, wird eine vollständige und zuverlässige Sterilisierung auch des Kontaktbereiches erreicht.

Die Verstellvorrichtung kann entsprechend als eine offene Konstruktion in einem Reinraum beziehungsweise einem Isolator einer Getränkeabfüllanlage verwendet werden und insbesondere auch in einer aseptischen Getränkeabfüllanlage, da sich sämtliche Komponenten und sämtliche mit dem Reinraum beziehungsweise dem Isolator in Wechselwirkung stehenden Kontaktflächen zuverlässig reinigen beziehungsweise sterilisieren lassen. Gegebenenfalls notwendige Antriebe für die Verstellvorrichtung können außerhalb des Isolators angeordnet sein, wobei lediglich eine Abdichtung der Rotationsbewegung, beispielsweise durch einen einfachen Wellendichtring, notwendig ist.

Darüber hinaus kann auf die Verwendung von Faltenbälgen verzichtet werden, so dass die mit den Faltenbälgen einhergehenden zusätzlichen Kosten und konstruktiven Probleme, wie beispielsweise eine sterilisierbare Anbindung an die entsprechenden, sich gegeneinander bewegenden Maschinenelemente, verzichtet werden kann.

Entsprechend stellt die Verstellvorrichtung einen effizienten Weg dar, eine Linearverstellung innerhalb einer Getränkeabfüllanlage oder insbesondere einer aseptischen Getränkeabfüllanlage bereitzustellen. Weiterhin kann die entsprechende Linearverstellung auch auf kleinstem Bauraum bewerkstelligt werden, da die voluminösen Anbauten, welche zur Anbindung der Faltenbalge notwendig sind, sowie auf die voluminösen Faltenbalge selbst verzichtet werden kann.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Verstellvorrichtung für die Getränkeabfüllanlage in einer perspektivischen Ansicht;
- Figur 2: eine schematische Schnittdarstellung durch das Rotationselement und das Translationselement in der Figur 1;
- Figur 3: ein Rotationselement in Form einer Gewindespindel in einer perspektivischen Darstellung;
- Figur 4: ein Translationselement in Form einer Gewindemutter in einer perspektivischen Darstellung; und
- Figur 5: ein Aspekt der Getränkeabfüllanlage in Form einer mit einer Verstellvorrichtung verbundenen Behälterführung in einer schematischen perspektivischen Darstellung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

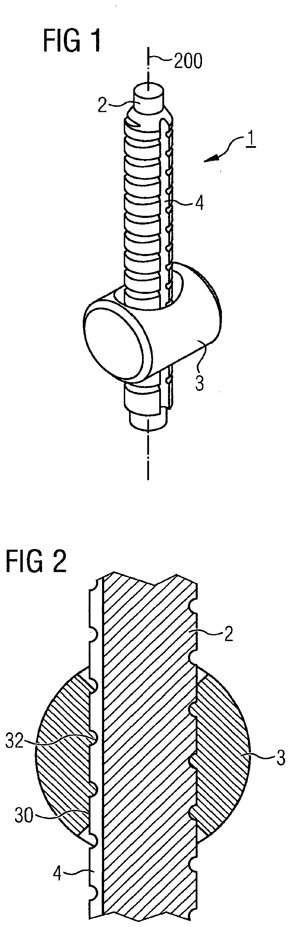

Figur 1 zeigt in einer schematischen perspektivischen Darstellung eine Verstellvorrichtung 1, welche ein Rotationselement 2 in Form einer Gewindespindel und ein Translationselement 3 in Form einer Gewindemutter aufweist. Bei der in Figur 1 schematisch gezeigten Verstellvorrichtung 1 handelt es sich entsprechend um einen Spindeltrieb, welcher beispielsweise dazu verwendet wird, eine lineare Verstellung zwischen zwei Maschinenelementen der Getränkeabfüllanlage zu ermöglichen.

In dem Rotationselement 2 ist eine Reinigungsausnehmung 4 vorgesehen, welche in dem in Figur 1 gezeigten Ausführungsbeispiel in Form einer sich in Richtung der Rotationsachse 200 des Rotationselements 2 erstreckenden und nach außen hin offenen Nut ausgebildet ist.

Die Reinigungsausnehmung 4 ist so ausgestaltet, dass bei einer Rotation des Rotationselements 2 der zwischen dem Rotationselement 2 und dem Translationselement 3 vorliegende Kontaktbereich innerhalb des Translationselements 3 von der Reinigungsausnehmung 4 überstrichen wird. Hierdurch wird es möglich, wie beispielsweise in dem in Figur 1 gezeigten Ausführungsbeispiel zu erkennen ist, eine Reinigungsflüssigkeit, ein Trocknungsmedium und/oder ein Sterilisationsmedium durch die Reinigungsausnehmung 4 auch auf sämtliche innen liegenden Flächen des Translationselements 3 aufzubringen, um eine vollständige Reinigung sämtlicher Oberflächen zu ermöglichen. Mit anderen Worten kann das Innengewinde des Translationselements 3 gereinigt, getrocknet und sterilisiert werden.

Entsprechend wird es möglich, die Verstellvorrichtung 1 beispielsweise in einem Isolator der Getränkeabfüllanlage, insbesondere einer aseptischen Getränkeabfüllanlage, anzuwenden, da sämtliche Oberflächen reinigbar und sterilisierbar sind und entsprechend keine versteckten Bereiche auftreten können, welche den Sterilbereich verletzen könnten.

Die Reinigungsausnehmung 4 ist bevorzugt so dimensioniert, dass sie ein Flüssigkeitsvolumen beziehungsweise Medienvolumen aufnehmen beziehungsweise transportieren kann, welches für die ordnungsgemäße Spülung, Reinigung, Trocknung und/oder Sterilisierung der Innenseiten des Translationselements 3 ausreichend ist. Zu diesem Punkt wird explizit darauf hingewiesen, dass sich die Reinigungsausnehmung nicht zwingend über die gesamte Länge des Rotationselementes, wie beispielsweise in Figur 1 gezeigt, erstrecken muss. Alternativ dazu kann die Reinigungsausnehmung auch lediglich an beispielsweise einem oberen oder unteren Ende des Rotationselementes angeordnet sein. Die Länge der Reinigungsausnehmung am Rotationselement ist vorteilhaft so gewählt, dass bei wenigstens einer Umdrehung des Rotationselementes auch jeder Bereich der Innenseite des Translationselementes mindestens einmal von der Reinigungsausnehmung überstrichen wird.

Alternativ zu der in Figur 1 gezeigten Nut kann die Reinigungsausnehmung 4 auch dadurch gebildet werden, dass das Rotationselement eine im Wesentlichen nicht kreisförmige Querschnittsfläche aufweist. So können beispielsweise einseitig Abflachungen entlang des Rotationselementes angeordnet sein oder auch mehrseitig Abflachungen entlang des Rotationselementes angeordnet sein, die beispielsweise zu einem trigonalen oder hexagonalen etc. Querschnitt führen. Ebenso können die Abflachungen nicht nur eine ebene Fläche aufweisen, sondern auch beispielsweise gewölbt sein, so dass der Querschnitt des Rotationselementes beispielsweise eine ellipsenähnliche Form erhält. Selbstverständlich ist bei der Wahl der Querschnittsfläche darauf zu achten, dass auf dem Umkreis der Querschnittsfläche noch ausreichend Platz für die dort angeordneten Gewindegänge ist. Für eine am Translationselement angeordnete Reinigungsausnehmung gilt das gleiche bezüglich der Innenseite des Translationselementes.

Die Materialien des Translationselements 3 und des Rotationselements 2 sind bevorzugt so aufeinander abgestimmt, dass auf eine Schmierung der Kontaktflächen verzichtet werden kann. Entsprechend kann auch nach einer Reinigung und Sterilisierung der Gewindebereiche des Translationselements 3 und des Rotationselements 2 eine zuverlässige Verstellung der jeweiligen Maschinenelemente erreicht werden, ohne dass durch den Betrieb der Verstellvorrichtung Schmiermittel oder verstärkter Abrieb in den Isolator der Getränkeabfüllanlage eingebracht wird. In Figur 2 ist schematisch ein Querschnitt durch den Kontaktbereich zwischen dem Translationselement 3 und dem Rotationselement 2 aus Figur 1 gezeigt. Die Reinigungsausnehmung 4 in Form einer Nut ist besonders gut zu erkennen. Entsprechend ist im Bereich der Reinigungsausnehmung 4 ein kleiner Abschnitt der Innenwand 30 des Translationselements 3 gezeigt. Bei der Rotation des Rotationselements 2 wird entsprechend von der Reinigungsausnehmung 4 die gesamte Innenwand 30 überstrichen und kann auf diese Weise gereinigt werden. Weiterhin gereinigt werden kann auch das Innengewinde 32 des Translationselements 3.

Hierbei ist zu beachten, dass es unproblematisch ist, das Außengewinde beziehungsweise die Außenseiten des Rotationselements 2 zu reinigen, da durch ein einfaches Rotieren des Rotationselements 2 eine Verschiebung des Translationselements 3 hervorgerufen wird, so dass eine Reinigung, Trocknung und/oder Sterilisierung des gesamten Rotationselements 2 erreicht werden kann. Durch das Aufbringen der Reinigungsausnehmung 4 jedoch wird es möglich, auch die innenliegenden Oberflächen des Translationselements 3 zu reinigen, besonders im Kontaktbereich zwischen dem Rotationselement 2 und dem Translationselement 3. Mit anderen Worten kann auch der Innengewindebereich einer Gewindemutter gereinigt werden, ohne die Gewindespindel aus der Gewindemutter entnehmen zu müssen.

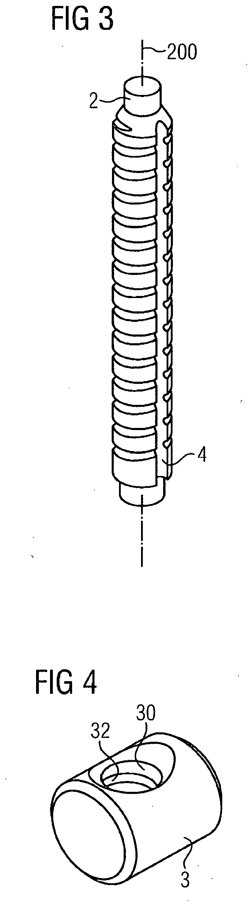

In der Figur 3 wird noch einmal das Rotationselement 2 in Form einer Gewindespindel mit der Reinigungsausnehmung 4, welche in Form einer sich in Richtung der Rotationsachse 200 erstreckenden Nut ausgebildet ist, gezeigt. Figur 4 zeigt ein Translationselement 3 in Form einer Gewindemutter, welche Innenwände 30 und ein Innengewinde 32 aufweist, welche mittels der beschriebenen Reinigungsausnehmung 4 in dem Rotationselement 2 gereinigt werden können, ohne das Rotationselement 2 aus dem Translationselement 3 zu entnehmen.

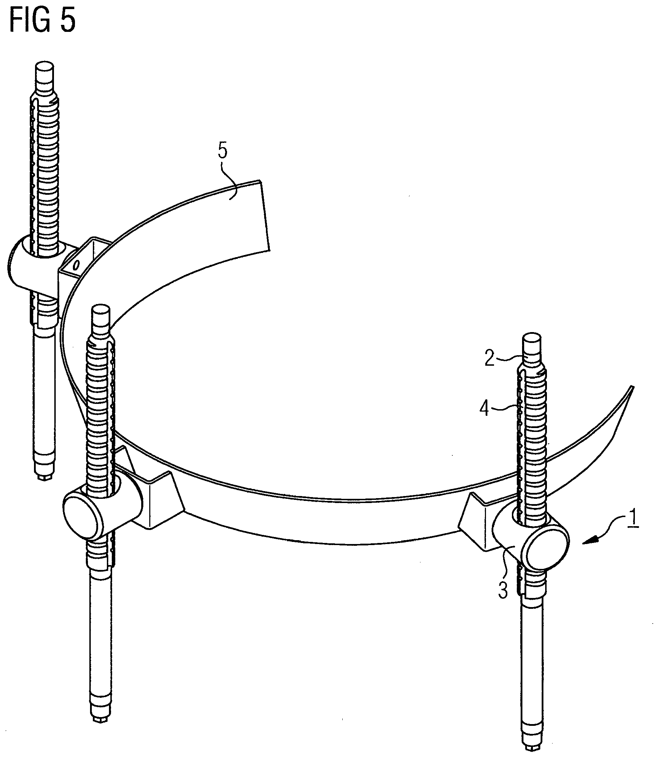

Figur 5 zeigt ein exemplarisches Anwendungsbeispiel für die Verstellvorrichtung 1 innerhalb der Getränkeabfüllanlage. Vorgesehen ist hier eine Behälterführung 5 für zu befüllende oder befüllte Getränkebehälter, beispielsweise als Behälteraußenführung eines Einlaufsternes oder eines Auslaufsternes, wobei die Führungseinrichtung 5 über die Verstellvorrichtung 1 höhenverstellbar ausgebildet ist. Hierzu ist das Translationselement 3 fest mit der Behälterführung 5 verbunden und das Rotationselement 2 stützt sich an einem anderen, hier nicht gezeigten Maschinenelement ab. Durch Rotation des Rotationselements 2 kann entsprechend der Abstand der Behälterführung zu dem nicht gezeigten weiteren Maschinenelement verstellt werden.

In einer besonderen Ausführung ist die Behälterführung 5 leicht konisch ausgebildet, so dass unterschiedliche Behälterdurchmesser mittels der Behälterführung 5 geführt werden können. Über die Verstellvorrichtung 1 und die damit einhergehende mögliche Höhenverstellung kann entsprechend die Behälterführung 5 auf unterschiedlichen Behältergrößen eingestellt werden. Da die Verstellvorrichtung 1 an allen Oberflächen gereinigt, getrocknet und/oder sterilisiert werden kann, kann sie auch in einem Isolator einer aseptischen Getränkeabfüllanlage verwendet werden.

Zur eigentlichen Reinigung beziehungsweise Sterilisierung wird während des Durchspülens des jeweiligen Anlagenbereiches, beispielsweise des Isolators, der Verstellantrieb 1 entsprechend dadurch bewegt, dass das Rotationselement 2 rotiert wird. Dadurch wird die in der Anlage befindliche Reinigungsflüssigkeit, das Trocknungsmedium beziehungsweise das Sterilisationsmedium über die Reinigungsausnehmung 4 des Rotationselements 2 auch in den entsprechenden Kontaktbereich zwischen dem Rotationselement 2 und dem Translationselement 3 gebracht. Dadurch kann eine vollständige Reinigung und/oder Sterilisation erreicht werden, so dass der in Figur 5 gezeigte Anlagenabschnitt vollständig gereinigt und sterilisiert werden kann. Dabei kann die Rotationsrichtung des Rotationselementes 2 auch - gegebenenfalls mehrmals - gewechselt werden, wodurch das Translationselement 3 beispielsweise eine wechselnde Auf- und Abbewegung durchführt. Dadurch kann eine noch effektivere Reinigung erreicht werden.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Verstellvorrichtung
- 2: Rotationselement
- 200: Rotationsachse des Rotationselements
- 3: Translationselement
- 30: Innenwand
- 32: Innengewinde
- 4: Reinigungsausnehmung
- 5: Behälterführung

## Patentansprüche

1. Getränkeabfüllanlage umfassend eine Verstellvorrichtung (1), welche ein Rotationselement (2) und ein durch Rotation des Rotationselements (2) relativ zu diesem translatorisch bewegbares Translationselement (3) umfasst,
**dadurch gekennzeichnet, dass**
das Rotationselement (2) und/oder das Translationselement (3) eine Reinigungsausnehmung (4) zur Reinigung eines Kontaktbereiches zwischen dem Translationselement (3) und dem Rotationselement (2) aufweist, wobei die Reinigungsausnehmung (4) so ausgebildet ist, dass eine freie Durchspülbarkeit des Kontaktbereichs mit einer Reinigungsflüssigkeit, einem Trocknungsmedium und/oder Sterilisationsmedium erreicht wird.

2. Getränkeabfüllanlage gemäß Anspruch 1, **dadurch gekennzeichnet, dass** das Rotationselement (2) eine Gewindespindel ist und das Translationselement (3) eine Gewindemutter ist.

3. Getränkeabfüllange gemäß Anspruch 1 oder 2, **dadurch gekennzeichnet, dass** die Reinigungsausnehmung (4) als mindestens eine offene Nut in dem Rotationselement (2) ausgebildet ist, bevorzugt als sich in Richtung der Rotationsachse (200) des Rotationselements (2) erstreckende offene Nut.

4. Getränkeabfüllanlage gemäß einem der vorstehenden Ansprüche, **dadurch gekennzeichnet, dass** die Reinigungsausnehmung (4) wendelförmig ausgebildet ist, bevorzugt mit einer von der Steigung einer Gewindespindel verschiedenen Steigung.

5. Getränkeabfüllanlage gemäß einem der vorstehenden Ansprüche 1-3, **dadurch gekennzeichnet, dass** die Reinigungsausnehmung (4) als mindestens eine sich senkrecht zur Rotationsachse (200) des Rotationselements (2) erstreckende Nut ausgebildet ist.

6. Getränkeabfüllanlage gemäß einem der vorstehenden Ansprüche, **dadurch gekennzeichnet, dass** mindestens zwei Reinigungsausnehmungen (4) an dem Rotationselement (2) und/oder dem Translationselement (3) vorgesehen sind.

7. Getränkeabfüllange gemäß einem der vorstehenden Ansprüche, **dadurch gekennzeichnet, dass** das Translationselement (3) oder das Rotationselement (2) mit einer Behälterführung (5) einer aseptischen Getränkeabfüllanlage verbunden ist, bevorzugt mit einer Behälteraußenführung eines Behälterfördersterns.

8. Getränkeabfüllanlage gemäß einem der vorstehenden Ansprüche, **dadurch gekennzeichnet, dass** das Rotationselement (2) und/oder das Translationselement (3) einen nicht konstanten Durchmesser aufweisen, bevorzugt ellipsenförmig und/oder mit einer Abflachung versehen sind.

9. Getränkeabfüllanlage gemäß einem der vorstehenden Ansprüche, **dadurch gekennzeichnet, dass** das Material des Rotationselements (2) und des Translationselements (3) so gewählt ist, dass im Kontaktbereich eine Selbstschmierung vorliegt.

10. Verfahren zur Reinigung einer Getränkeabfüllanlage gemäß einem der vorstehenden Ansprüche, umfassend das Beaufschlagen der Verstellvorrichtung (2) mit einer Reinigungsflüssigkeit, einem Trocknungsmedium und/oder einem Sterilisationsmedium,
**dadurch gekennzeichnet, dass**
das Rotationselement (2) während der Beaufschlagung der Verstellvorrichtung (1) mit Reinigungsflüssigkeit, Trocknungsmedium und/oder Sterilisationsmedium rotiert wird.

11. Verfahren gemäß Anspruch 10, **dadurch gekennzeichnet, dass** das Rotieren des Rotationselements (2) bis zur Erreichung der Sterilisierung wiederholt wird.

## Claims

1. Filling beverage system comprising an adjusting apparatus (1), which comprises a rotation element (2) and a translation element (3) which can be moved in a translatory manner relative to the rotation element (2) by rotation of the said rotation element,
**characterized in that**
the rotation element (2) and/or the translation element (3) have/has a cleaning recess (4) for cleaning a contact region between the translation element (3) and the rotation element (2), wherein the cleaning recess (4) is formed such that the ability to freely thoroughly rinse the contact region with a cleaning liquid, a drying medium and/or sterilization medium is achieved.

2. Filling beverage system according to claim 1, **characterized in that** the rotation element (2) is a lead screw, and the translation element (3) is a threaded nut.

3. Filling beverage system according to claim 1 or 2, **characterized in that** the cleaning recess (4) is in the form of at least one open groove in the rotation element (2), preferably in the form of an open groove which extends in the direction of the rotation axis (200) of the rotation element (2).

4. Filling beverage system according to one of the preceding claims, **characterized in that** the cleaning recess (4) is of helical form, preferably with a pitch which is different from the pitch of a lead screw.

5. Filling beverage system according to one of the preceding claims 1-3, **characterized in that** the cleaning recess (4) is in the form of at least one groove which extends perpendicularly to the rotation axis (200) of the rotation element (2).

6. Filling beverage system according to one of the preceding claims, **characterized in that** at least two cleaning recesses (4) are provided on the rotation element (2) and/or on the translation element (3).

7. Filling beverage system according to one of the preceding claims, **characterized in that** the translation element (3) or the rotation element (2) is connected to a container guide (5) of an aseptic beverage filling system, preferably to an external container guide of a container conveyor star wheel.

8. Filling beverage system according to one of the preceding claims, **characterized in that** the rotation element (2) and/or the translation element (3) have a non-constant diameter, preferably are ellipsoidal and/or are provided with a flattened portion.

9. Filling beverage system according to one of the preceding claims, **characterized in that** the material of the rotation element (2) and of the translation element (3) is selected such that a self-lubrication is provided in the contact region.

10. Method for cleaning a filling beverage system according to one of the preceding claims, comprising the application of a cleaning liquid, a drying medium and/or a sterilization medium to the adjusting apparatus (2),
**characterized in that**
the rotation element (2) is rotated during the application of cleaning liquid, drying medium and/or sterilization medium to the adjusting apparatus (1).

11. Method according to claim 10, **characterized in that** the rotation of the rotation element (2) is repeated until sterilization is achieved.

## Revendications

1. Installation d'embouteillage de boissons comprenant un dispositif de réglage (1) qui comprend un élément de rotation (2) et un élément de translation (3) déplaçable en translation par rapport à celui-ci sous l'effet de la rotation de l'élément de rotation (2),
**caractérisée en ce que**
l'élément de rotation (2) et/ou l'élément de translation (3) présente un évidement de nettoyage (4) pour le nettoyage d'une zone de contact entre l'élément de translation (3) et l'élément de rotation (2), dans laquelle l'évidement de nettoyage (4) est configuré de façon à permettre un balayage libre de la zone de contact avec un liquide de nettoyage, un fluide de séchage et/ou un fluide de stérilisation.

2. Installation d'embouteillage de boissons selon la revendication 1, **caractérisée en ce que** l'élément de rotation (2) est une broche filetée et l'élément de translation (3) est un écrou fileté.

3. Installation d'embouteillage de boissons selon la revendication 1 ou 2, **caractérisée en ce que** l'évidement de nettoyage (4) est réalisé sous la forme d'au moins une rainure ouverte dans l'élément de rotation (2), de préférence sous la forme d'une rainure ouverte s'étendant dans la direction de l'axe de rotation (200) de l'élément de rotation (2).

4. Installation d'embouteillage de boissons selon l'une quelconque des revendications précédentes, **caractérisée en ce que** l'évidement de nettoyage (4) est réalisé en forme d'hélice, de préférence avec un pas différent du pas d'une broche filetée.

5. Installation d'embouteillage de boissons selon l'une quelconque des revendications précédentes 1 à 3, **caractérisée en ce que** l'évidement de nettoyage (4) est réalisé sous la forme d'au moins une rainure s'étendant perpendiculairement à l'axe de rotation (200) de l'élément de rotation (2).

6. Installation d'embouteillage de boissons selon l'une quelconque des revendications précédentes, **caractérisée en ce qu'**il est prévu au moins deux évidements de nettoyage (4) sur l'élément de rotation (2) et/ou sur l'élément de translation (3).

7. Installation d'embouteillage de boissons selon l'une quelconque des revendications précédentes, **caractérisée en ce que** l'élément de translation (3) ou l'élément de rotation (2) est relié à un guidage de récipient (5) d'une installation aseptique d'embouteillage de boissons, de préférence à un guidage extérieur de récipients d'une étoile de transport de récipients.

8. Installation d'embouteillage de boissons selon l'une quelconque des revendications précédentes, **caractérisée en ce que** l'élément de rotation (2) et/ou l'élément de translation (3) présentent un diamètre non constant, et sont de préférence elliptiques et/ou dotés d'un méplat.

9. Installation d'embouteillage de boissons selon l'une quelconque des revendications précédentes, **caractérisée en ce que** le matériau de l'élément de rotation (2) et de l'élément de translation (3) est choisi de telle manière qu'il existe une autolubrification dans la zone de contact.

10. Procédé de nettoyage d'une installation d'embouteillage de boissons selon l'une quelconque des revendications précédentes, comprenant l'exposition du dispositif de réglage (2) à un liquide de nettoyage, à un fluide de séchage et/ou à un fluide de stérilisation,
**caractérisé en ce que**
l'on fait tourner l'élément de rotation (2) pendant l'exposition du dispositif de réglage (1) à un liquide de nettoyage, à un fluide de séchage et/ou à un fluide de stérilisation.

11. Procédé selon la revendication 10, **caractérisé en ce que** l'on répète la rotation de l'élément de rotation (2) jusqu'à l'obtention de la stérilisation.
